# EUROPEAN PATENT SPECIFICATION

(11) **EP 3 933 869 B1**
(45) Date of publication and mention of the grant of the patent: **01.04.2026**
(21) Application number: 21305856.3
(22) Date of filing: 23.06.2021
(51) Int. Cl.: H01H 3/40, H01H 3/42, H01H 3/30, H01H 3/28

(54) **OPERATING MECHANISM FOR DUAL POWER SUPPLY CHANGEOVER SWITCH AND DUAL POWER SUPPLY CHANGEOVER SWITCH**
BETÄTIGUNGSMECHANISMUS FÜR DOPPELSTROMVERSORGUNGWECHSELSCHALTER SOWIE DOPPELSTROMVERSORGUNGWECHSELSCHALTER
MÉCANISME DE FONCTIONNEMENT POUR UN COMMUTATEUR À DOUBLE ALIMENTATION ET COMMUTATEUR À DOUBLE ALIMENTATION

(30) Priority: 24.06.2020 CN 202021203315 U
(43) Date of publication of application: 05.01.2022
(73) Proprietor: Schneider Electric Industries SAS, 92500 Rueil-Malmaison (FR)
(72) Inventor: MAO, Shunxian, Shanghai 201203 (CN); LIU, Zhenzhong, Shanghai 201203 (CN); ZHOU, Bin, Shanghai 201203 (CN); WU, Jian, Shanghai 201203 (CN)
(74) Representative: Manitz Finsterwald Patent- und Rechtsanwaltspartnerschaft mbB

(56) References cited:
- EP-A1- 3 567 622
- CN-U- 210 743 822
- US-A1- 2008 245 645

## Description

### TECHNICAL FIELD

The present disclosure relates to an operating mechanism for a dual power supply changeover switch and a dual power supply changeover switch.

### BACKGROUND

Dual power supply changeover switches are widely used in industrial field, especially in emergency power supply systems. Based on the condition of a power supply circuit, the dual power supply changeover switch can switch a load circuit from one power supply to another one, for example, switching between a commercial power supply and a standby power supply, so as to maintain a continuous and reliable operation of the load circuit. CN-U-210743822 discloses a prior art changeover switch.

At present, there are special-purpose type dual power supply changeover switches and derived type dual power supply changeover switches. With increased attentions on dual power supply changeover switches from customers, more and more customers choose special-purpose type dual power supply changeover switches. Because applications of the dual power supply changeover switch are classified into network-network applications and network-oil engine applications, it is necessary to adopt an upper wiring mode for some cases and to adopt a lower wiring mode for some other cases. Customers in different countries have different requirements for a position of a controller in a product. Thus, a mechanism needs to be placed at a left side of a contact system of a breaking unit for some cases and placed at a right side of the contact system for some other cases. Moreover, with the increase of current level, dual power supply changeover switches require for products with different frame levels. In products with different frame levels, the operating mechanism cannot be shared. As a result, more types of operating mechanisms are needed, which increases the amount of the types and the complexity of the components.

Therefore, there is a need for a flexible dual power supply changeover switch that can be applied to different situations.

### SUMMARY

The present disclosure provides an operating mechanism for a dual power supply changeover switch and a dual power supply changeover switch. Such operating mechanism has a symmetrical configuration, so that it can be flexibly assembled, can meet requirements of different application situations, decreases the types of components and parts, reduces the cost and improves the reliability.

On one hand, the present disclosure provides an operating mechanism for a dual power supply changeover switch capable of switching among a dual-off position, a first power-on position and a second power-on position. The operating mechanism includes: a first supporting plate and a second supporting plate which are parallel to each other and spaced apart from each other; a plurality of first supporting members configured to fix the first supporting plate and the second supporting plate together; a first electromagnet assembly and a second electromagnet assembly which are symmetrically mounted on the first supporting plate and the second supporting plate about a symmetry plane; and an output assembly mounted on the first supporting plate and the second supporting plate along a rotation axis in the symmetry plane, the output assembly is capable of rotating around the rotation axis and has a first driving rod, the first driving rod protrudes from the second supporting plate and is connected to a movable contact carrier. The output assembly includes a rotating shaft, a rotating disc and a first driving disc. The first electromagnet assembly and the second electromagnet assembly are configured to drive the output assembly to rotate in a first direction and a second direction which are opposite to each other, respectively, and hence to drive the movable contact carrier of the dual power supply changeover switch to rotate by the first driving rod.

The operating mechanism further includes a first elastic member and a second elastic member which are symmetrically arranged about the symmetry plane, wherein one end of the first elastic member abuts against the rotating disc, and the other end of the first elastic member is mounted between the first supporting plate and the second supporting plate through a pivot shaft of the first elastic member, so that it can store an energy when the output assembly rotates and can release the energy after passing through a "dead point" to drive the output assembly to further rotate; one end of the second elastic member abuts against the rotating disc, and the other end of the second elastic member is mounted between the first supporting plate and the second supporting plate through a pivot shaft of the second elastic member, so that it can store an energy when the output assembly rotates and can release the energy after passing through a "dead point" to drive the output assembly to further rotate.

In an embodiment, the second supporting plate is provided with an opening for the first driving rod.

In an embodiment, the operating mechanism further includes: a third supporting plate which is parallel to the first supporting plate and the second supporting plate and is located between the first supporting plate and the second supporting plate; a second supporting member configured to fix the first supporting plate and the third supporting plate together; and a third supporting member configured to fix the second supporting plate and the third supporting plate together, wherein the other end of the first elastic member and the other end of the second elastic member are mounted between the first supporting plate and the third supporting plate through corresponding pivot shafts.

In an embodiment, the first supporting plate and the third supporting plate are provided with a plurality of first holes, the plurality of first holes are configured to mount the pivot shaft of the first elastic member and the pivot shaft of the second elastic member and are arranged symmetrically with respect to the symmetry plane.

In an embodiment, the output assembly includes: a rotating shaft mounted on the first supporting plate and the second supporting plate along a rotation axis; a rotating disc mounted on the rotating shaft and capable of rotating around the rotating shaft; and a first driving disc mounted on the rotating shaft and capable of rotating in cooperation with the rotating disc when the rotating disc rotates, wherein the first driving rod is fixed on the first driving disc.

In an embodiment, the output assembly further includes a transmission disc, the transmission disc is mounted on the rotating shaft and is capable of driving the first driving disc to rotate when the rotating disc rotates, and the transmission disc includes tooth parts symmetrical about the symmetry plane.

In an embodiment, the operating mechanism further includes a manual operating member mounted between the second supporting plate and the third supporting plate at one side of the symmetry plane, and tooth parts of the manual operating member are engaged with the tooth parts of the transmission disc to rotate the transmission disc under a manual operation so as to drive the first driving disc to rotate.

In an embodiment, the manual operating member has a mounting shaft; and the second supporting plate and the third supporting plate are provided with a plurality of second holes for the mounting shaft, and the plurality of second holes are arranged symmetrically with respect to the symmetry plane.

In an embodiment, the operating mechanism further includes a second driving disc and a second driving rod, wherein the second driving disc is mounted on the rotating shaft, is located near the first supporting plate, and is capable of rotating together with the first driving disc; and the second driving rod is fixed on the second driving disc, protrudes out of the operating mechanism from a side opposite to the first driving rod, and is connected to another movable contact carrier so as to drive the another movable contact carrier to rotate when the first driving disc rotates.

In an embodiment, the operating mechanism further includes a transmission rod which connects the second driving disc with the first driving disc.

On the other hand, the present disclosure further provides a dual power supply changeover switch including the operating mechanism described above.

### BRIEF DESCRIPTION OF THE DRAWINGS

Advantages and objectives of the present disclosure can be better understood from the following detailed description of the preferred embodiments of the present disclosure in conjunction with the drawings. The drawings are not drawn to scale in order to better illustrate the relationship among the components therein. In the drawings:
Fig. 1 illustrates an exploded view of an operating mechanism for a dual power supply changeover switch according to the present disclosure;
Fig. 2 illustrates a side view of an operating mechanism for a dual power supply changeover switch according to the present disclosure;
Fig. 3 illustrates a perspective view from the right side of the operating mechanism of Fig. 2;
Fig. 4 illustrates a perspective view from the left side of the operating mechanism of Fig. 2;
Fig. 5 illustrates an internal perspective view of four assembling modes of an operating mechanism for a dual power supply changeover switch according to the present disclosure, in which a supporting plate of the operating mechanism is not illustrated;
Fig. 6 illustrates a practical application situation of an operating mechanism for a dual power supply changeover switch according to the present disclosure;
Fig. 7 illustrates another practical application situation of an operating mechanism for a dual power supply changeover switch according to the present disclosure;
Fig. 8 illustrates a perspective view of an operating mechanism for a dual power supply changeover switch with a manual operating member according to the present disclosure;
Fig. 9 is a perspective view illustrating a mounting position of a manual operating member according to the present disclosure;
Fig. 10 illustrates a schematic diagram of a transmission disc of an operating mechanism for a dual power supply changeover switch according to the present disclosure;
Fig. 11 illustrates a side view of another operating mechanism for a dual power supply changeover switch according to the present disclosure;
Fig. 12 illustrates a partial stereogram view of the operating mechanism in Fig. 11; and
Fig. 13 is a schematic diagram illustrating a second driving disc, a second driving rod and a transmission rod included in the operating mechanism of Fig. 11.

### DETAILED DESCRIPTION

Embodiments according to the present disclosure will be described in detail with reference to the drawings. Here, it should be noted that in the drawings, the same reference numerals are given to components having substantially the same or similar structures and functions, and repeated descriptions thereof will be omitted. Unless otherwise specified, the terms "first direction", "second direction", "rotation direction", "left side" and "right side" are described relative to the drawings of the present disclosure. The term "including A, B, C, etc., in sequence" only indicates an arrangement order of the included components A, B, C, etc., and does not exclude the possibility of including other component(s) between A and B and/or between B and C. The description of "first" and its variants is only for purpose of distinguishing various components, and does not limit the scope of the present disclosure. Without departing from the scope of the present disclosure, the "first component" can be written as "second component", etc.

The accompanying drawings of the description are schematic diagrams, which assist in explaining the concept of the present disclosure and schematically represent the shapes of various parts and their mutual relationships.

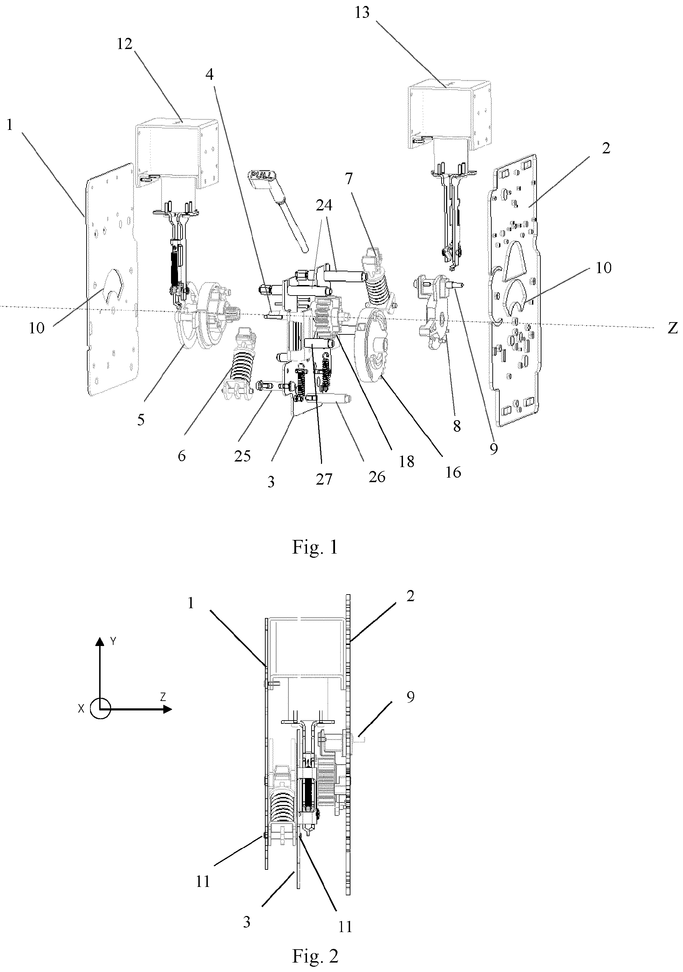

Hereinafter, referring to Figs. 1 to 13, the preferred embodiments according to the present disclosure will be described in details.

Fig. 1 illustrates an exploded view of an operating mechanism for a dual power supply changeover switch according to an embodiment of the present disclosure. Under an action of the operating mechanism, the dual power supply changeover switch can be switched among a dual-off position, a first power-on position and a second power-on position.

As illustrated in Fig. 1, the operating mechanism includes a first supporting plate 1, a second supporting plate 2 and a third supporting plate 3, which are parallel to each other and spaced apart from each other. The third supporting plate 3 is located between the first supporting plate 1 and the second supporting plate 2. The operating mechanism also includes a plurality of first supporting members 24 for fixing the first supporting plate 1 and the second supporting plate 2 together. The first supporting members 24 pass through corresponding holes in the third supporting plate 3. In addition, the operating mechanism also includes a second supporting member 25 for fixing the first supporting plate 1 and the third supporting plate 3 together, and a third supporting member 26 for fixing the second supporting plate 2 and the third supporting plate 3 together. Preferably, the amount of the second supporting member 25 is two, and the two second supporting members 25 are symmetrical about a symmetry plane A. In other examples, the operating mechanism may not include the third supporting plate 3.

Referring to Figs. 1, 3 and 4, the operating mechanism further includes a first electromagnet assembly 12 and a second electromagnet assembly 13 symmetrically mounted on the first supporting plate 1 and the second supporting plate 2 about a symmetry plane A. In addition, the operating mechanism also includes an output assembly, which is mounted on the first supporting plate 1 and the second supporting plate 2 along a rotation axis Z located in the symmetry plane A and is capable of rotating about the rotation axis Z. The output assembly includes a rotating shaft 4, a rotating disc 5, a first driving disc 8 and a first driving rod 9. The rotating shaft 4 is mounted on the first supporting plate 1 and the second supporting plate 2 along the rotation axis Z, and may be located between the first supporting plate 1 and the second supporting plate 2 or protrude from one of the two supporting plates. For example, as illustrated in Fig. 1, the rotating shaft 4 is mounted in corresponding holes in the first supporting plate 1 and the second supporting plate 2 through a hole (not illustrated) in the third supporting plate 3. The rotating disc 5 is mounted on the rotating shaft 4 and is capable of rotating about the rotating shaft 4. The first driving disc 8 is mounted on the rotating shaft 4 and is capable of rotating in cooperation with the rotating disc 5 when the rotating disc 5 rotates. The first driving rod 9 is fixed on the first driving disc 8, protrudes out of an opening 10 in the second supporting plate 2 and is connected to a movable contact carrier of the dual power supply changeover switch. The first driving rod 9 is capable of driving the movable contact carrier to rotate when the first driving disc 8 rotates, so that the dual power supply changeover switch can be switched among the dual-off position, the first power-on position and the second power-on position. The opening 10 in the second supporting plate 2 is provided so that the first driving rod 9 is capable of rotating therein without any obstruction. In other examples, the first supporting plate 1 may also be provided with an opening 10 with a corresponding shape for bidirectional output, the details of which will be described later.

The first electromagnet assembly 12 and the second electromagnet assembly 13 can be movable upwards to drive the output assembly to rotate in opposite, first and second directions respectively, and then drive the movable contact carrier to rotate through the first driving rod 9. For example, the first electromagnet assembly 12 drives the rotating disc 5 to rotate clockwise around the rotation axis Z, and the second electromagnet assembly 13 drives the rotating disc 5 to rotate counterclockwise around the rotation axis Z.

Referring to Fig. 1, Fig. 3 and Fig. 4, the operating mechanism further includes a first elastic member 6 and a second elastic member 7 symmetrically arranged about the symmetry plane A. One end of the first elastic member 6 abuts against the output assembly (for example, the rotating disc 5), and the other end is mounted between the first supporting plate and the third supporting plate through a pivot shaft of the first elastic member 6. In an example without the third supporting plate, the first elastic member 6 and the second elastic member 7 are mounted between the first supporting plate 1 and the second supporting plate 2, respectively. The first elastic member 6 can store an energy when the output assembly (e.g., the rotating disc 5) rotates and can release the energy after passing through a "dead point" so as to drive the output assembly to rotate further. One end of the second elastic member 7 abuts against the output assembly (e.g., the rotating disc 5), and the other end is mounted between the first supporting plate and the third supporting plate through a pivot shaft of the second elastic member 7. The second elastic member 7 can store an energy when the output assembly (for example, the rotating disc 5) rotates and can release the energy after passing through a "dead point" so as to drive the output assembly to rotate further.

For example, when the first electromagnet assembly 12 drives the rotating disc 5 to rotate in the clockwise direction (the first direction) around the rotation axis, the second elastic member 7 stores an energy, and the second elastic member 7 releases the energy after passing through the "dead point" so as to drive the rotating disc 5 to rotate further in the clockwise direction around the rotation axis Z. For example, when the second electromagnetic component 13 drives the rotating disc 5 to rotate in the counterclockwise direction (the second direction) around the rotation axis Z, the first elastic member 6 stores an energy, and the first elastic member 6 releases the energy after passing through the "dead point" so as to drive the rotating disc 5 to rotate further in the counterclockwise direction around the rotation axis Z.

Through the cooperation of the first electromagnet assembly 12 and the second electromagnet assembly 13 symmetrically arranged about the symmetry plane A and the first elastic member 6 and the second elastic member 7 symmetrically arranged about the symmetry plane A, and of the output assembly rotatable about the rotation axis located in the symmetry plane A, the switching between different positions of the dual power supply changeover switch can be realized.

In addition, as illustrated in Figs. 2 to 4, each of the first supporting plate 1 and the third supporting plate 3 is provided with a plurality of first holes 11, for example, two first holes, for mounting pivot shafts of the first elastic member 6 and the second elastic member 7, and the plurality of first holes 11 are arranged symmetrically with respect to the symmetry plane A.

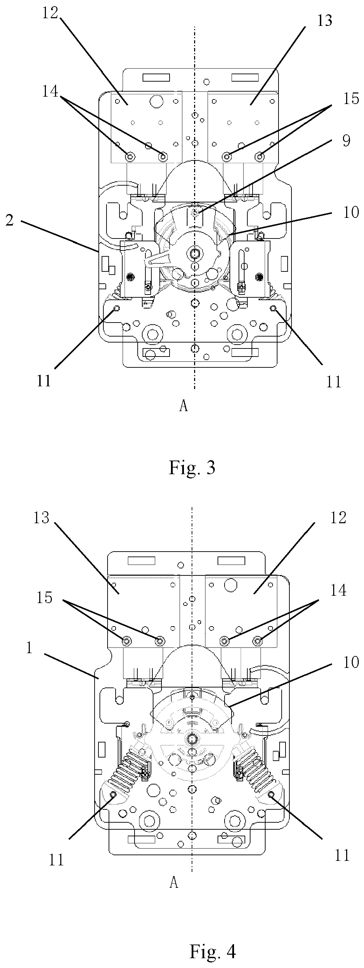

As illustrated in Figs. 3 and 4, the first supporting plate 1 and the second supporting plate 2 are respectively provided with third holes 14 and 15, the third holes 14 and 15 are symmetrical about the symmetry plane A and are configured to mount the first electromagnet assembly 12 and the second electromagnet assembly 13, respectively.

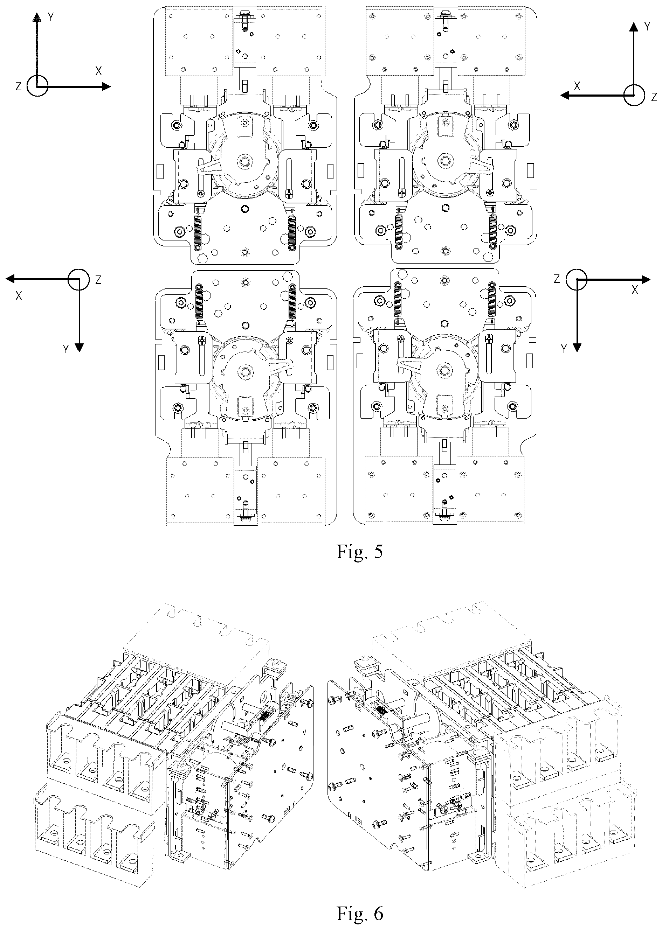

Due to the symmetrical design of the present disclosure, the operating mechanism can be arranged at the left or right side of the breaking unit. For example, when the operating mechanism is arranged at the left side of the breaking unit as illustrated in the right-side figure of Fig. 6, the operating mechanism provides a right-side driving mode, and the perspective view of the operating mechanism at this time is illustrated in the figure at the upper left corner of Fig. 5. For example, when the operating mechanism is arranged at the right side of the breaking unit as illustrated in the left-side figure of Fig. 6, the operating mechanism provides a left-side driving mode, and the perspective view of the operating mechanism at this time is illustrated in the figure at the upper right corner of Fig. 5. The first driving disc in the figure at the upper right corner of Fig. 5 is reversely mounted on the rotating shaft with respect to the first driving disc in the figure at the upper left corner of Fig. 5; however, in other examples, the installation of the first driving disc may be unchanged.

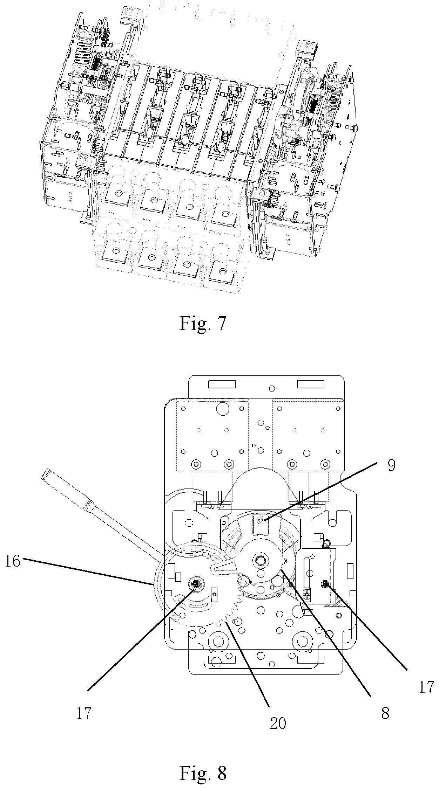

In other examples, according to the above two situations, two operating mechanisms can be mounted for one breaking unit; the two operating mechanisms are located at opposite sides of the breaking unit, as illustrated in Fig. 7. In this case, it can provide more power for the conversion process, and such operating mechanism can also be applied to the situation of high rated current.

According to the description above, due to the symmetrical configuration and flexible assembly mode of the present disclosure, the operating mechanism can realize the left-side driving mode and the right-side driving mode, as illustrated in the upper, two figures of Fig. 5. In addition, when the operating mechanisms in the upper, two figures of Fig. 5 are assembled in an upside-down manner, a driving mode at the positions illustrated in the lower, two figures of Fig. 5 can be realized, which can be applied to switches with wire inlet terminals at different positions. Further, the operating mechanism of the present disclosure can also be applied to the breaking unit with high rated current, as illustrated in Fig. 7. Therefore, the operating mechanism of the present disclosure can be flexibly assembled according to the position of the movable contact of the breaking unit, so as to meet the requirements of different application situations, decrease the types of components and parts, reduce the cost and improve the reliability.

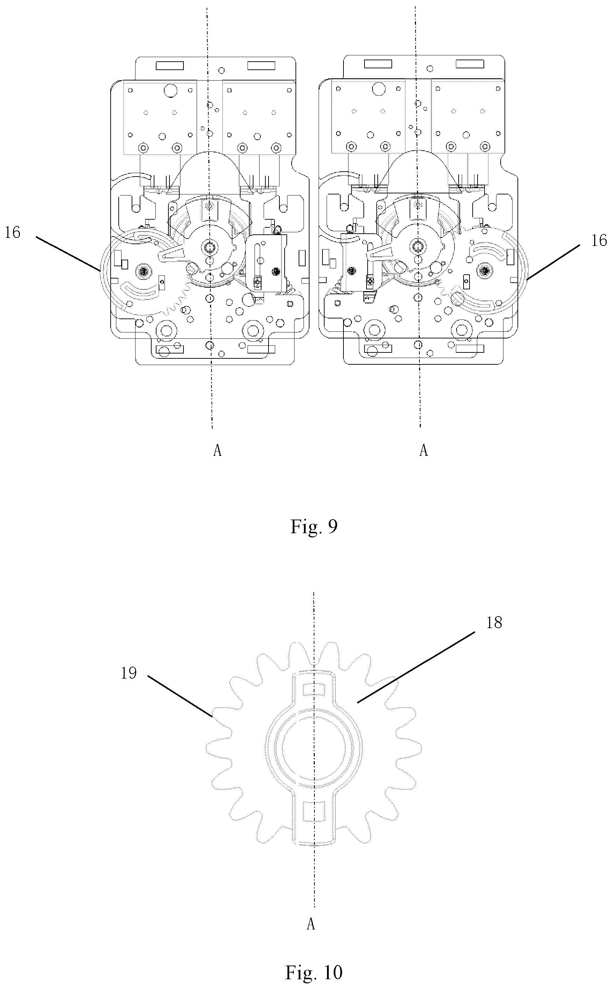

In another embodiment, as illustrated in Fig. 1, the output assembly further includes a transmission disc 18, which is mounted on the rotating shaft 4 and is capable of driving the first driving disc 8 to rotate when the rotating disc 5 rotates. For example, as illustrated in Fig. 10, the transmission disc 18 includes tooth parts 19 symmetrical about the symmetry plane A. In other examples, the transmission disc 18 may be formed integrally with the rotating disc 5.

As illustrated in Figs. 1 and 8, the operating mechanism further includes a manual operating member 16, which has a mounting shaft 27 and is mounted between the second supporting plate and the third supporting plate through the mounting shaft 27. Each of the second supporting plate 2 and the third supporting plate 3 is provided with a plurality of second holes 17, for example, two second holes, for the mounting shaft 27, and the plurality of second holes 17 are arranged symmetrically with respect to the symmetry plane. The mounting shaft 27 is arranged between the second supporting plate and the third supporting plate through two second holes 17 at corresponding positions in the second supporting plate and the third supporting plate. For example, the manual operating member 16 is located at the left side of the symmetry plane A, and tooth parts 20 of the manual operating member 16 are engaged with the tooth parts 19 of the transmission disc 18 so as to rotate the transmission disc 18 under a manual operation, thereby driving the first driving disc 8 to rotate.

The manual operating member 16 may be located at the left side of the symmetry plane A, as illustrated in the left-side figure of Fig. 9. The manual operating member 16 may also be located at the right side of the symmetry plane A, as illustrated in the right-side figure of Fig. 9. The two positions of the manual operating member 16 in Fig. 9 are symmetrical about the symmetry plane A. In this way, the operating mechanism can provide flexible manual operation positions to be suitable for different application situations.

Because the tooth parts 19 of the transmission disc 18 are symmetrically arranged about the symmetry plane A, no matter at which side of the symmetry plane A the manual operating member 16 is located, the manual operating member 16 can drive the transmission disc 18 to rotate so as to realize the rotation of the driving rod 9.

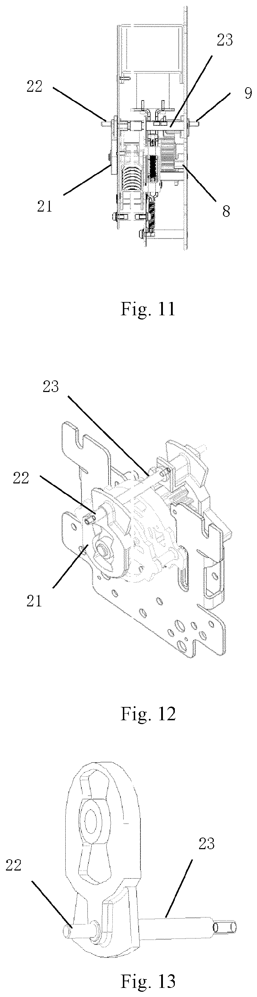

As illustrated in Fig. 11, the operating mechanism further includes a second driving disc 21, a second driving rod 22 and a transmission rod 23. The second driving disc 21 is mounted on the rotating shaft 4, located near the first supporting plate 1, away from the first driving disc 8, for example, located at an outer side of the first supporting plate 1 as illustrated in the figure. In other examples, the second driving disc 21 may also be located at an inner side of the first supporting plate 1. The transmission rod 23 connects the second driving disc 21 with the first driving disc 8 so that the second driving disc 21 can rotate together with the first driving disc 8. As illustrated in Fig. 11, the transmission rod 23 passes through the opening 10 in the first supporting plate 1 to connect the second driving disc 21 with the first driving disc 8. For example, the transmission rod 23 is connected to the first driving disc 8 by a pin located at an end of the transmission rod 23, as illustrated in Figs. 12 and 13. As illustrated in Figs. 11 and 12, the second driving rod 22 is fixed on the second driving disc 21, protrudes out of the operating mechanism from a side opposite to the first driving rod 9 (for example, along the horizontal, right direction in Fig. 11), and is connected to another movable contact carrier so as to be capable of rotating the another movable contact carrier when the first driving disc 8 rotates. In other examples, the second driving rod may protrude from the opening 10 in the first supporting plate 1.

With the above structure, the operating mechanism of the present disclosure can realize the output in two directions, and can drive the breaking units at both sides of the operating mechanism respectively, thereby providing more flexible configuration, stable driving mode and higher reliability.

## Claims

1. An operating mechanism for a dual power supply changeover switch capable of switching among a dual-off position, a first power-on position and a second power-on position, **characterized by** that, the operating mechanism comprises:
a first supporting plate (1) and a second supporting plate (2) which are parallel to each other and spaced apart from each other;
a plurality of first supporting members (24) configured to fix the first supporting plate (1) and the second supporting plate (2) together;
a first electromagnet assembly (12) and a second electromagnet assembly (13) which are symmetrically mounted on the first supporting plate (1) and the second supporting plate (2) about a symmetry plane (A);
an output assembly mounted on the first supporting plate (1) and the second supporting plate (2) along a rotation axis (Z) in the symmetry plane (A), the output assembly is capable of rotating around the rotation axis (Z) and has a first driving rod (9), the first driving rod (9) protrudes from the second supporting plate (2) and is connected to a movable contact carrier, wherein the output assembly includes a rotating shaft (4), a rotating disc (5) and a first driving disc (8); and
a first elastic member (6) and a second elastic member (7) which are symmetrically arranged about the symmetry plane (A),
wherein the first electromagnet assembly (12) and the second electromagnet assembly (13) are configured to drive the output assembly to rotate in a first direction and a second direction which are opposite to each other, respectively, and hence to drive the movable contact carrier of the dual power supply changeover switch to rotate by the first driving rod (9), and
wherein one end of the first elastic member (6) abuts against the rotating disc (5), and the other end of the first elastic member (6) is mounted between the first supporting plate (1) and the second supporting plate (2) through a pivot shaft of the first elastic member (6), so that it can store an energy when the output assembly rotates and can release the energy after passing through a "dead point" to drive the output assembly to further rotate;
one end of the second elastic member (7) abuts against the rotating disc (5), and the other end of the second elastic member (7) is mounted between the first supporting plate (1) and
the second supporting plate (2) through a pivot shaft of the second elastic member (7), so that it can store an energy when the output assembly rotates and can release the energy after passing through a "dead point" to drive the output assembly to further rotate.

2. The operating mechanism according to claim 1, **characterized by** that, the second supporting plate (2) is provided with an opening (10) for the first driving rod (9).

3. The operating mechanism according to claim 1 or 2, **characterized by** that, the operating mechanism further comprises:
a third supporting plate (3) which is parallel to the first supporting plate (1) and the second supporting plate (2) and is located between them;
a second supporting member (25) configured to fix the first supporting plate (1) and the third supporting plate (3) together; and
a third supporting member (26) configured to fix the second supporting plate (2) and the third supporting plate (3) together,
wherein the other end of the first elastic member (6) and the other end of the
second elastic member (7) are mounted between the first supporting plate (1)
and the third supporting plate (3) through corresponding pivot shafts.

4. The operating mechanism according to claim 3, **characterized by** that, the first supporting plate (1) and the third supporting plate (3) are provided with a plurality of first holes (11), the plurality of first holes (11) are configured to mount the pivot shaft of the first elastic member (6) and the pivot shaft of the second elastic member (7) and are arranged symmetrically with respect to the symmetry plane (A).

5. The operating mechanism according to claim 3 or 4, **characterized by** that:
the rotating shaft (4) is mounted on the first supporting plate (1) and the second supporting plate (2) along the rotation axis (Z);
the rotating disc (5) is mounted on the rotating shaft (4) and capable of rotating around the rotating shaft (4); and
the first driving disc (8) is mounted on the rotating shaft (4) and capable of rotating in cooperation with the rotating disc (5) when the rotating disc (5) rotates,
wherein the first driving rod (9) is fixed on the first driving disc (8).

6. The operating mechanism according to claim 5, **characterized by** that, the output assembly further comprises a transmission disc (18), the transmission disc (18) is mounted on the rotating shaft (4) and is capable of driving the first driving disc (8) to rotate when the rotating disc (5) rotates, and the transmission disc (18) comprises tooth parts (19) symmetrical about the symmetry plane (A).

7. The operating mechanism according to claim 6, **characterized by** that, the operating mechanism further comprises a manual operating member (16) mounted between the second supporting plate (2) and the third supporting plate (3) at one side of the symmetry plane (A), and tooth parts (20) of the manual operating member (16) are engaged with the tooth parts (19) of the transmission disc (18) to rotate the transmission disc (18) under a manual operation so as to drive the first driving disc (8) to rotate.

8. The operating mechanism according to claim 7, **characterized by** that, the manual operating member (16) has a mounting shaft (27), and the second supporting plate (2) and the third supporting plate (3) are provided with a plurality of second holes (17) for the mounting shaft (27), and the plurality of second holes (17) are arranged symmetrically with respect to the symmetry plane (A).

9. The operating mechanism according to claim 5, **characterized by** that, the operating mechanism further comprises a second driving disc (21) and a second driving rod (22),
wherein the second driving disc (21) is mounted on the rotating shaft (4), is located near the first supporting plate (1), and is capable of rotating together with the first driving disc (8); and
the second driving rod (22) is fixed on the second driving disc (21), protrudes out of the operating mechanism from a side opposite to the first driving rod (9), and is connected to another movable contact carrier so as to drive the another movable contact carrier to rotate when the first driving disc (8) rotates.

10. The operating mechanism according to claim 9, **characterized by** that, the operating mechanism further comprises a transmission rod (23) which connects the second driving disc (21) with the first driving disc (8).

11. A dual power supply changeover switch, **characterized by** that, the dual power supply changeover switch comprises the operating mechanism according to any one of claims 1 to 10.

## Patentansprüche

1. Betätigungsmechanismus für einen Doppelstromversorgungs-Umschalter, der zwischen einer doppelten Ausschaltposition, einer ersten Einschaltposition und einer zweiten Einschaltposition umschalten kann,
**dadurch gekennzeichnet, dass** der Betätigungsmechanismus Folgendes umfasst:
eine erste Trägerplatte (1) und eine zweite Trägerplatte (2), die parallel zueinander und voneinander beabstandet sind;
mehrere erste Trägerelemente (24), die konfiguriert sind, um die erste Trägerplatte (1) und die zweite Trägerplatte (2) aneinander zu befestigen;
eine erste Elektromagnetanordnung (12) und eine zweite Elektromagnetanordnung (13), die symmetrisch auf der ersten Trägerplatte (1) und der zweiten Trägerplatte (2) um eine Symmetrieebene (A) montiert sind;
eine Ausgangsanordnung, die auf der ersten Trägerplatte (1) und der zweiten Trägerplatte (2) entlang einer Drehachse (Z) in der Symmetrieebene (A) montiert ist, wobei die Ausgangsanordnung sich um die Drehachse (Z) drehen kann und eine erste Antriebsstange (9) aufweist, wobei die erste Antriebsstange (9) von der zweiten Trägerplatte (2) vorsteht und mit einem beweglichen Kontaktträger verbunden ist, wobei die Ausgangsanordnung eine Drehwelle (4), eine Drehscheibe (5) und eine erste Antriebsscheibe (8) umfasst; und
ein erstes elastisches Element (6) und ein zweites elastisches Element (7), die symmetrisch um die Symmetrieebene (A) angeordnet sind,
wobei die erste Elektromagnetanordnung (12) und die zweite Elektromagnetanordnung (13) konfiguriert sind, um die Ausgangsanordnung zur Drehung in einer ersten Richtung bzw. einer zweiten Richtung anzutreiben, die einander entgegengesetzt sind, und somit den beweglichen Kontaktträger des Doppelstromversorgungs-Umschalters zur Drehung durch die erste Antriebsstange (9) anzutreiben, und
wobei ein Ende des ersten elastischen Elements (6) an der Drehscheibe (5) anliegt und das andere Ende des ersten elastischen Elements (6) zwischen der ersten Trägerplatte (1) und der zweiten Trägerplatte (2) durch eine Schwenkwelle des ersten elastischen Elements (6) montiert ist, so dass es eine Energie speichern kann, wenn sich die Ausgangsanordnung dreht, und die Energie freisetzen kann, nachdem es einen "Totpunkt" zum Antrieb der Ausgangsanordnung, um sich weiter zu drehen, durchlaufen hat;
ein Ende des zweiten elastischen Elements (7) an der Drehscheibe (5) anliegt und das andere Ende des zweiten elastischen Elements (7) zwischen der ersten Trägerplatte (1) und der zweiten Trägerplatte (2) durch eine Schwenkwelle des zweiten elastischen Elements (7) montiert ist, so dass es eine Energie speichern kann, wenn sich die Ausgangsanordnung dreht, und die Energie freisetzen kann, nachdem es einen "Totpunkt" zum Antrieb der Ausgangsanordnung, um sich weiter zu drehen, durchlaufen hat.

2. Betätigungsmechanismus nach Anspruch 1, **dadurch gekennzeichnet, dass** die zweite Trägerplatte (2) mit einer Öffnung (10) für die erste Antriebsstange (9) versehen ist.

3. Betätigungsmechanismus nach einem der Ansprüche 1 oder 2, **dadurch gekennzeichnet, dass** der Betätigungsmechanismus ferner Folgendes umfasst:
eine dritte Trägerplatte (3), die parallel zu der ersten Trägerplatte (1) und der zweiten Trägerplatte (2) ist und zwischen diesen angeordnet ist;
ein zweites Trägerelement (25), das konfiguriert ist, um die erste Trägerplatte (1) und die dritte Trägerplatte (3) aneinander zu befestigen; und
ein drittes Trägerelement (26), das konfiguriert ist, um die zweite Trägerplatte (2) und die dritte Trägerplatte (3) aneinander zu befestigen,
wobei das andere Ende des ersten elastischen Elements (6) und das andere Ende des zweiten elastischen Elements (7) zwischen der ersten Trägerplatte (1) und der dritten Trägerplatte (3) durch entsprechende Schwenkwellen montiert sind.

4. Betätigungsmechanismus nach Anspruch 3, **dadurch gekennzeichnet, dass** die erste Trägerplatte (1) und die dritte Trägerplatte (3) mit mehreren ersten Löchern (11) versehen sind, wobei die mehreren ersten Löcher (11) konfiguriert sind, um die Schwenkwelle des ersten elastischen Elements (6) und die Schwenkwelle des zweiten elastischen Elements (7) zu montieren, und symmetrisch in Bezug auf die Symmetrieebene (A) angeordnet sind.

5. Betätigungsmechanismus nach einem der Ansprüche 3 oder 4, **dadurch gekennzeichnet, dass**:
die Drehwelle (4) auf der ersten Trägerplatte (1) und der zweiten Trägerplatte (2) entlang der Drehachse (Z) montiert ist;
die Drehscheibe (5) auf der Drehwelle (4) montiert ist und sich um die Drehwelle (4) drehen kann; und
die erste Antriebsscheibe (8) auf der Drehwelle (4) montiert ist und sich zusammen mit der Drehscheibe (5) drehen kann, wenn sich die Drehscheibe (5) dreht,
wobei die erste Antriebsstange (9) an der ersten Antriebsscheibe (8) befestigt ist.

6. Betätigungsmechanismus nach Anspruch 5, **dadurch gekennzeichnet, dass** die Ausgangsanordnung ferner eine Übertragungsscheibe (18) umfasst, wobei die Übertragungsscheibe (18) auf der Drehwelle (4) montiert ist und die erste Antriebsscheibe (8) zur Drehung antreiben kann, wenn sich die Drehscheibe (5) dreht, und die Übertragungsscheibe (18) Zahnteile (19) symmetrisch um die Symmetrieebene (A) umfasst.

7. Betätigungsmechanismus nach Anspruch 6, **dadurch gekennzeichnet, dass** der Betätigungsmechanismus ferner ein manuelles Betätigungselement (16) umfasst, das zwischen der zweiten Trägerplatte (2) und der dritten Trägerplatte (3) auf einer Seite der Symmetrieebene (A) montiert ist, und Zahnteile (20) des manuellen Betätigungselements (16) mit den Zahnteilen (19) der Übertragungsscheibe (18) in Eingriff stehen, um die Übertragungsscheibe (18) bei einer manuellen Betätigung zu drehen, um die erste Antriebsscheibe (8) zum Drehen anzutreiben.

8. Betätigungsmechanismus nach Anspruch 7, **dadurch gekennzeichnet, dass** das manuelle Betätigungselement (16) eine Montagewelle (27) aufweist und die zweite Trägerplatte (2) und die dritte Trägerplatte (3) mit mehreren zweiten Löchern (17) für die Montagewelle (27) versehen sind,
und die mehreren zweiten Löcher (17) symmetrisch in Bezug auf die Symmetrieebene (A) angeordnet sind.

9. Betätigungsmechanismus nach Anspruch 5, **dadurch gekennzeichnet, dass** der Betätigungsmechanismus ferner eine zweite Antriebsscheibe (21) und eine zweite Antriebsstange (22) umfasst,
wobei die zweite Antriebsscheibe (21) auf der Drehwelle (4) montiert ist, sich in der Nähe der ersten Trägerplatte (1) befindet und sich zusammen mit der ersten Antriebsscheibe (8) drehen kann; und die zweite Antriebsstange (22) an der zweiten Antriebsscheibe (21) befestigt ist, aus dem Betätigungsmechanismus von einer Seite gegenüber der ersten Antriebsstange (9) vorsteht und mit einem anderen beweglichen Kontaktträger verbunden ist, um den anderen beweglichen Kontaktträger zum Drehen anzutreiben, wenn sich die erste Antriebsscheibe (8) dreht.

10. Betätigungsmechanismus nach Anspruch 9, **dadurch gekennzeichnet, dass** der Betätigungsmechanismus ferner eine Übertragungsstange (23) umfasst, die die zweite Antriebsscheibe (21) mit der ersten Antriebsscheibe (8) verbindet.

11. Doppelstromversorgungs-Umschalter, **dadurch gekennzeichnet, dass** der Doppelstromversorgungs-Umschalter den Betätigungsmechanismus nach einem der Ansprüche 1 bis 10 umfasst.

## Revendications

1. Mécanisme de manœuvre pour un commutateur de transfert à double alimentation capable de commuter entre une position de double arrêt, une première position de marche et une deuxième position de marche, **caractérisé en ce que** le mécanisme de manœuvre comprend :
une première plaque de support (1) et une deuxième plaque de support (2) qui sont parallèles l'une à l'autre et espacées l'une de l'autre ;
une pluralité de premiers éléments de support (24) configurés pour fixer ensemble la première plaque de support (1) et la deuxième plaque de support (2) ;
un premier ensemble électroaimant (12) et un deuxième ensemble électroaimant (13) qui sont montés symétriquement sur la première plaque de support (1) et la deuxième plaque de support (2) autour d'un plan de symétrie (A) ;
un ensemble de sortie monté sur la première plaque de support (1) et la deuxième plaque de support (2) le long d'un axe de rotation (Z) dans le plan de symétrie (A), l'ensemble de sortie étant capable de tourner autour de l'axe de rotation (Z) et comportant une première tige d'entraînement (9), la première tige d'entraînement (9) faisant saillie à partir de la deuxième plaque de support (2) et étant reliée à un support de contact mobile, dans lequel l'ensemble de sortie inclut un arbre rotatif (4), un disque rotatif (5) et un premier disque d'entraînement (8) ; et
un premier élément élastique (6) et un deuxième élément élastique (7) qui sont disposés symétriquement autour du plan de symétrie (A),
dans lequel le premier ensemble électroaimant (12) et le deuxième ensemble électroaimant (13) sont configurés pour faire tourner l'ensemble de sortie dans une première direction et une deuxième direction qui sont opposées l'une à l'autre, respectivement, et donc faire tourner le support de contact mobile du commutateur de double alimentation par la première tige d'entraînement (9), et
dans lequel une extrémité du premier élément élastique (6) bute contre le disque rotatif (5) et l'autre extrémité du premier élément élastique (6) est montée entre la première plaque de support (1) et la deuxième plaque de support (2) par l'intermédiaire d'un axe de pivotement du premier élément élastique (6), de sorte qu'il peut stocker de l'énergie lorsque l'ensemble de sortie tourne et peut libérer l'énergie après avoir passé un « point mort » pour faire tourner davantage l'ensemble de sortie ;
une extrémité du deuxième élément élastique (7) bute contre le disque rotatif (5) et l'autre extrémité du deuxième élément élastique (7) est montée entre la première plaque de support (1) et la deuxième plaque de support (2) par l'intermédiaire d'un axe de pivotement du deuxième élément élastique (7), de sorte qu'il peut stocker de l'énergie lorsque l'ensemble de sortie tourne et peut libérer l'énergie après avoir passé un « point mort » pour faire tourner davantage l'ensemble de sortie.

2. Mécanisme de manœuvre selon la revendication 1, **caractérisé en ce que** la deuxième plaque de support (2) est pourvue d'une ouverture (10) pour la première tige d'entraînement (9).

3. Mécanisme de manœuvre selon la revendication 1 ou 2, **caractérisé en ce que** le mécanisme de manoeuvre comprend en outre :
une troisième plaque de support (3) qui est parallèle à la première plaque de support (1) et à la deuxième plaque de support (2) et qui est située entre celles-ci ;
un deuxième élément de support (25) configuré pour fixer ensemble la première plaque de support (1) et la troisième plaque de support (3) ; et
un troisième élément de support (26) configuré pour fixer ensemble la deuxième plaque de support (2) et la troisième plaque de support (3),
dans lequel l'autre extrémité du premier élément élastique (6) et l'autre extrémité du deuxième élément élastique (7) sont montées entre la première plaque de support (1) et la troisième plaque de support (3) par l'intermédiaire d'axes de pivotement correspondants.

4. Mécanisme de manœuvre selon la revendication 3, **caractérisé en ce que** la première plaque de support (1) et la troisième plaque de support (3) sont pourvues d'une pluralité de premiers trous (11), la pluralité de premiers trous (11) étant configurée pour monter l'axe de pivotement du premier élément élastique (6) et l'axe de pivotement du deuxième élément élastique (7) et étant disposée symétriquement par rapport au plan de symétrie (A).

5. Mécanisme de manœuvre selon la revendication 3 ou 4, **caractérisé en ce que** :
l'arbre rotatif (4) est monté sur la première plaque de support (1) et la deuxième plaque de support (2) le long de l'axe de rotation (Z) ;
le disque rotatif (5) est monté sur l'arbre rotatif (4) et est capable de tourner autour de l'arbre rotatif (4) ; et
le premier disque d'entraînement (8) est monté sur l'arbre rotatif (4) et est capable de tourner en coopération avec le disque rotatif (5) lorsque le disque rotatif (5) tourne,
dans lequel la première tige d'entraînement (9) est fixée sur le premier disque d'entraînement (8).

6. Mécanisme de manœuvre selon la revendication 5, **caractérisé en ce que** l'ensemble de sortie comprend en outre un disque de transmission (18), le disque de transmission (18) est monté sur l'arbre rotatif (4) et est capable de faire tourner le premier disque d'entraînement (8) lorsque le disque rotatif (5) tourne, et le disque de transmission (18) comprend des parties dentées (19) symétriques autour du plan de symétrie (A).

7. Mécanisme de manœuvre selon la revendication 6, **caractérisé en ce que** le mécanisme de manœuvre comprend en outre un élément de manœuvre manuel (16) monté entre la deuxième plaque de support (2) et la troisième plaque de support (3) d'un côté du plan de symétrie (A), et des parties dentées (20) de l'élément de manœuvre manuel (16) sont en prise avec les parties dentées (19) du disque de transmission (18) pour faire tourner le disque de transmission (18) sous l'effet d'une action manuelle de manière à faire tourner le premier disque d'entraînement (8).

8. Mécanisme de manœuvre selon la revendication 7, **caractérisé en ce que** l'élément d'actionnement manuel (16) comporte un arbre de montage (27), et la deuxième plaque de support (2) et la troisième plaque de support (3) sont pourvues d'une pluralité de deuxièmes trous (17) pour l'arbre de montage (27), et la pluralité de deuxièmes trous (17) sont disposés symétriquement par rapport au plan de symétrie (A).

9. Mécanisme de manœuvre selon la revendication 5, **caractérisé en ce que** le mécanisme de manœuvre comprend en outre un deuxième disque d'entraînement (21) et une deuxième tige d'entraînement (22),
dans lequel le deuxième disque d'entraînement (21) est monté sur l'arbre rotatif (4), est situé près de la première plaque de support (1) et est capable de tourner avec le premier disque d'entraînement (8) ; et
la deuxième tige d'entraînement (22) est fixée sur le deuxième disque d'entraînement (21), fait saillie du mécanisme de manœuvre à partir d'un côté opposé à la première tige d'entraînement (9) et est reliée à un autre support de contact mobile de manière à faire tourner l'autre support de contact mobile lorsque le premier disque d'entraînement (8) tourne.

10. Mécanisme de manœuvre selon la revendication 9, **caractérisé en ce que** le mécanisme de manœuvre comprend en outre une tige de transmission (23) qui relie le deuxième disque d'entraînement (21) au premier disque d'entraînement (8).

11. Commutateur de transfert à double alimentation, **caractérisé en ce que** le commutateur de transfert à double alimentation comprend le mécanisme de manœuvre selon l'une quelconque des revendications 1 à 10.
